## Europäisches Patentamt

## European Patent Office

## Office européen des brevets

(19)

(11) Veröffentlichungsnummer: **0 047 467**
**B1**

(12) **EUROPÄISCHE PATENTSCHRIFT**

(45) Veröffentlichungstag der Patentschrift:
**21.12.83**

(51) Int. Cl.³: **F 16 L 23/00**

(21) Anmeldenummer: **81106807.1**

(22) Anmeldetag: **01.09.81**

(54) Stossverbindung für Kanalabschnitte aus Blech, insbes. Kanalabschnitte für Lüftungsanlagen.

(30) Priorität: **04.09.80 DE 3033268**

(43) Veröffentlichungstag der Anmeldung:
**17.03.82 Patentblatt 82/11**

(45) Bekanntmachung des Hinweises auf die Patenterteilung:
**21.12.83 Patentblatt 83/51**

(84) Benannte Vertragsstaaten:
**AT BE CH DE FR GB IT LI NL SE**

(56) Entgegenhaltungen:
**AT - B - 352 487**
**DD - A - 131 052**
**DE - A - 2 321 347**
**DE - A - 2 838 497**

(73) Patentinhaber: **Karl Meinig KG, Seitinger Strasse 186, D-7201 Weilheim (DE)**

(72) Erfinder: **Meinig, Manfred, Goethestrasse 186, D-7201 Weilheim (DE)**

(74) Vertreter: **Patentanwälte Dipl.-Ing. Westphal Dr. rer. nat. Bernd Mussgnug Dr. rer.nat. Otto Buchner, Seb.-Kneipp-Strasse 14, D-7730 VS-Villingen (DE)**

BUNDESDRUCKEREI BERLIN

## Stoßverbindung für Kanalabschnitte aus Blech, insbesondere Kanalabschnitte für Lüftungsanlagen

Die Erfindung betrifft eine Stoßverbindung für Kanalabschnitte aus Blech, insbesondere Kanalabschnitte für Lüftungsanlagen gemäß Oberbegriff des Patentanspruchs 1.

Bei einer aus der DE-C-1 976 547 bekannten Stoßverbindung, die sich in der Praxis hervorragend bewährt hat, sind die Eckwinkelstücke flache Stanzteile. Die in das Hohlprofil der Profilschienen eingesteckten Schenkel der Eckwinkelstücke liegen an der in der Stoßfugenebene liegenden Wand der Profilschienen an. Um das Hohlprofil vollständig auszufüllen, ist zusätzlich eine Beilage vorgesehen, die im wesentlichen mit dem Eckwinkelstück deckungsgleich ist, im Bereich der Schenkel jedoch ein Winkelprofil aufweist, welches sich an die nicht in der Stoßfugenebene liegenden Seiten des Hohlprofils anlegt. Im nicht in die Profilschienen eingesteckten Scheitelbereich der Eckwinkelstücke liegt die Beilage flach an dem Eckwinkelstück an und ist in der Bohrung für die Verbindungsschraube z. B. durch Einbördeln mit dem Eckwinkelstück verbunden.

Das Eckwinkelstück und die Beilage müssen gesondert hergestellt und in einem zusätzlichen Arbeitsgang miteinander verbunden werden. Dies beeinflußt die Herstellungskosten erheblich. Aufgrund des Winkelprofils der Beilage ist der ebene Scheitelbereich vertieft angeordnet, so daß die Schraubenköpfe und -muttern, die sich in diesem Schenkelbereich befinden, beim Verschrauben schlecht zugänglich sind. Die Schrauben können bei der Montage daher nur mit einem Ring- oder Steckschraubenschlüssel, nicht aber mit einem Gabelschraubenschlüssel, angezogen werden.

Bei einer aus der DE-A-2 836 761 bekannten Stoßverbindung der eingangs genannten Gattung weisen die in das Hohlprofil des Flansches einsteckbaren Schenkel der Eckwinkelstücke ein Winkelprofil auf, wodurch sich eine einstückige Herstellung ergibt. Die zur Stoßfugenebene senkrechte Profilkante der Schenkel erzeugt eine hohe Biegesteifigkeit senkrecht zur Stoßfugenebene, wie sie vorteilhaft ist, um die Flansche mit hoher Stabilität gegeneinander zu pressen. Da die Eckwinkelstücke jedoch in dem außerhalb der Profilschienen liegenden Scheitelbereich eben in der Stoßfugenebene ausgebildet sind, setzt sich diese senkrecht zur Stoßfugenebene verlaufende Profilkante nicht bis in den Eckbereich fort, in welchem die Zugspannung der Schraubverbindung erzeugt wird. Das Eckwinkelstück weist daher in dem Scheitelbereich und insbesondere im Übergang von dem ebenen Scheitelbereich zu dem Winkelprofil der Schenkel keine solche hohe Biegesteifigkeit auf. Die durch die Schraubverbindung erzeugte Zugspannung kann daher nur in beschränktem Maße auf die Schenkel der Eckwinkelstücke übertragen und damit für die Stabilität der Flanschverbindung ausgenützt werden. Außerdem ist in gleicher Weise die Schraubverbindung bei der Montage schlecht zugänglich.

Der Erfindung liegt die Aufgabe zugrunde, eine Stoßverbindung der eingangs genannten Gattung so zu verbessern, daß die Stabilität der Stoßverbindung erhöht und die Montage erleichtert wird.

Diese Aufgabe wird bei einer Stoßverbindung für Kanalabschnitte der eingangs genannten Gattung erfindungsgemäß durch die Merkmale des kennzeichnenden Teiles des Patentanspruches 1 gelöst.

Vorteilhafte Ausführungsformen und Weiterbildungen der Erfindung sind Gegenstand der Unteransprüche.

Bei der erfindungsgemäßen Stoßverbindung sind die Eckwinkelstücke einstückig ausgebildet, d. h. es wird keine Beilage benötigt, um das Hohlprofil der Profilschienen auszufüllen. Das Winkelprofil der Schenkel der Eckwinkelstücke gewährleistet ein sattes Ausfüllen des Hohlprofiles und damit eine einwandfreie Lagefixierung der Eckwinkel in den Profilschienen und eine optimale Kraftübertragung von den Eckwinkelstücken auf die Profilschienen bei Verschrauben der Stoßverbindung. Das Winkelprofil gibt den Eckwinkelstücken außerdem eine hohe Steifigkeit gegen Biegebeanspruchung. Die durch das dreieckige Hohlprofil der Profilschienen gegebene hohe Steifigkeit, die für das dichte Abschließen der Stoßverbindung wesentlich ist, wird daher auch vollständig über die Ecken des Kanalquerschnittes aufrechterhalten. Die Stoßverbindung kann daher mit einer hohen Zugspannung in Kanalrichtung verschraubt und somit optimal abgedichtet werden.

Das gesamte Eckwinkelstück ist als Stanz-Preßteil in einem einzigen Arbeitsgang und damit äußerst preisgünstig herstellbar. Durch das ausgewölbte U-Profil des Scheitelbereiches der Eckwinkelstücke in Kanalrichtung wird erreicht, daß die Schraubenköpfe und -muttern für die Verschraubung der Stoßverbindungen ringsum frei zugänglich sind, so daß die Schraubverbindung mit jedem beliebigen Schraubenschlüssel und unbehindert montiert werden kann. Dabei kann das Loch für die Verbindungsschraube sogar noch näher an die Wand des Kanalabschnittes herangerückt werden, so daß die Zugbelastbarkeit zusätzlich erhöht wird.

Aufgrund der hohen Steifigkeit und Zugbelastbarkeit der Eckwinkelstücke ist es nicht notwendig, die Profilschienen vollständig bis in die Ecken des Kanalabschnittes zu führen. Bei den üblicherweise verwendeten aus Blechtafeln gebogenen Kanalabschnitten kann daher der in Kanalrichtung verlaufende Falz in einer Ecke des Kanalabschnittes angeordnet werden, ohne daß die Profilschienen des Flansches zur Aufnahme des Falzes ausgeklinkt werden müssen. Dies bedeutet eine Vereinfachung in der Fertigung und außerdem können die durch Ausklinkungen verursachten Undichtigkeiten vermieden werden.

Die hohe Festigkeit der Eckwinkelstücke und ihre einstückige Ausbildung hat weiter den Vorteil, daß die Eckwinkelstücke bei der Montage trotz ihres reibschlüssigen Sitzes in den Profilschienen leicht in diese eingesetzt werden können. Weisen die Profilschienen einen Längsschlitz auf, mit welchem der Flansch auf den Kanalabschnitt aufgesteckt wird, wie dies in der DE-C-1 946 547 beschrieben ist, so hat die hohe Festigkeit des Winkelprofiles der Schenkel der Eckwinkelstücke und die Abrundung des Scheitelwinkels des Winkelprofiles zusätzlich den Vorteil, daß auch beim Aufstecken des Flansches mit starken Hammerschlägen die Eckwinkelstücke durch die eindringende Wand des Kanalabschnittes nicht verformt werden. Durch den abgerundeten Scheitelwinkel des Winkelprofiles der Schenkel wird vielmehr die Wand des Kanalabschnittes so geführt, daß sie zuverlässig vollständig in die Profilschiene eindringt und die Dichtungseigenschaften beeinträchtigende Montageungenauigkeiten vermieden werden.

Zweckmäßigerweise kann eine Kunststoffbeilage in das ausgewölbte U-Profil des Schenkelbereiches der Eckwinkelstücke eingesetzt werden. Diese Kunststoffbeilage ist für die Verbindung der benachbarten Profilschienen und für die Steifigkeit und Zugbelastbarkeit der Eckwinkelstücke ohne Bedeutung. Die Kunststoffbeilage dient lediglich zur Abstützung der zwischen die Stoßflächen aneinander anschließender Flansche eingesetzten Dichtung.

Die äußere auf die Stoßfugenfläche zugerichtete Kante des Scheitelbereiches weist einen etwas größeren Abstand von der Stoßfugenebene auf als die innere Kante, wodurch sichergestellt ist, daß zwischen den Eckstücken aneinander stoßender Flansche ein geringer Luftspalt bleibt und die Zugkraft der Schraubverbindung voll auf die Profilschienen übertragen werden kann.

Im folgenden wird die Erfindung anhand eines in der Zeichnung dargestellten Ausführungsbeispieles näher erläutert. Es zeigt

Fig. 1 eine Stoßverbindung gemäß der Erfindung in perspektivischer Ansicht,

Fig. 2 das mit dem Flansch versehene Ende eines Kanalabschnittes in perspektivischer Teilansicht,

Fig. 3 einen Teilschnitt gemäß der Linie III-III in Fig. 1,

Fig. 4 eine Draufsicht auf den Scheitelbereich des Eckwinkelstückes und

Fig. 5 einen Schnitt durch die Stoßverbindung gemäß der Linie V-V in Fig. 1.

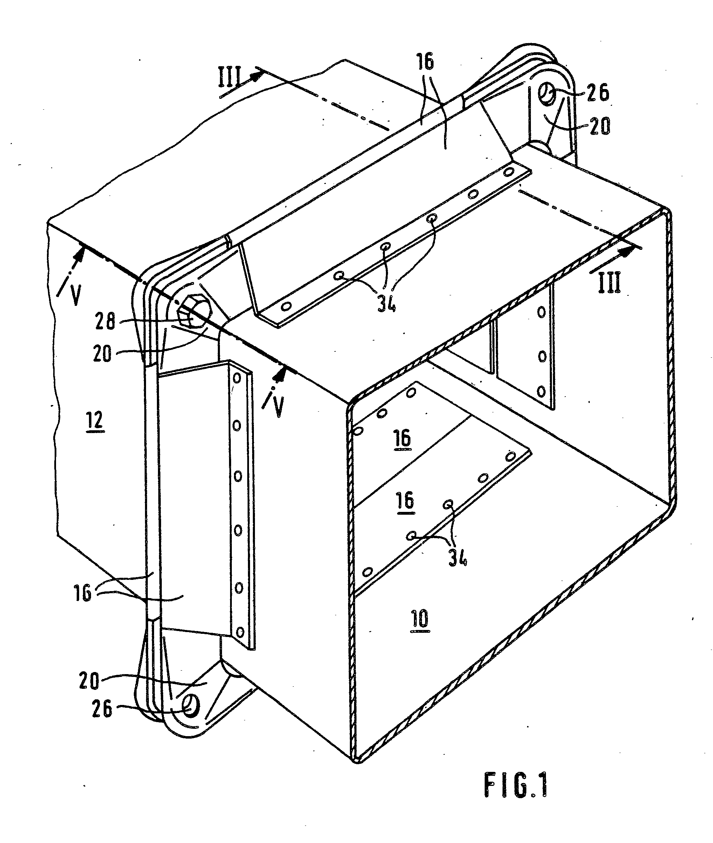

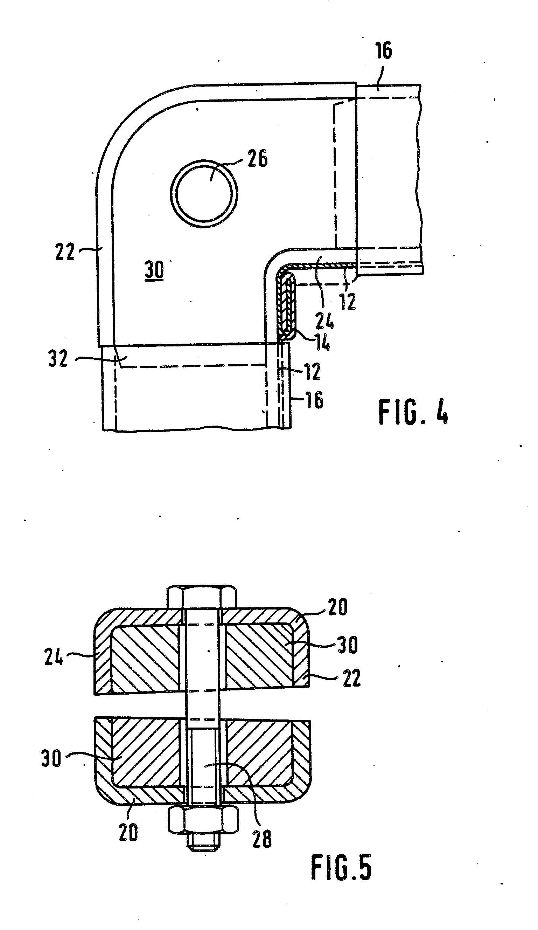

Die Fig. 1 zeigt die Stoßverbindung zweier Kanalabschnitte 10 und 12. Die Kanalabschnitte 10 und 12 weisen einen rechteckigen Querschnitt auf und sind aus Blechtafeln gebogen, wobei die in Kanallängsrichtung verlaufenden Kanten der Blechtafeln durch einen in Fig. 4 sichtbaren in einer Ecke des Querschnittes verlaufenden Falz 14 miteinander verbunden sind.

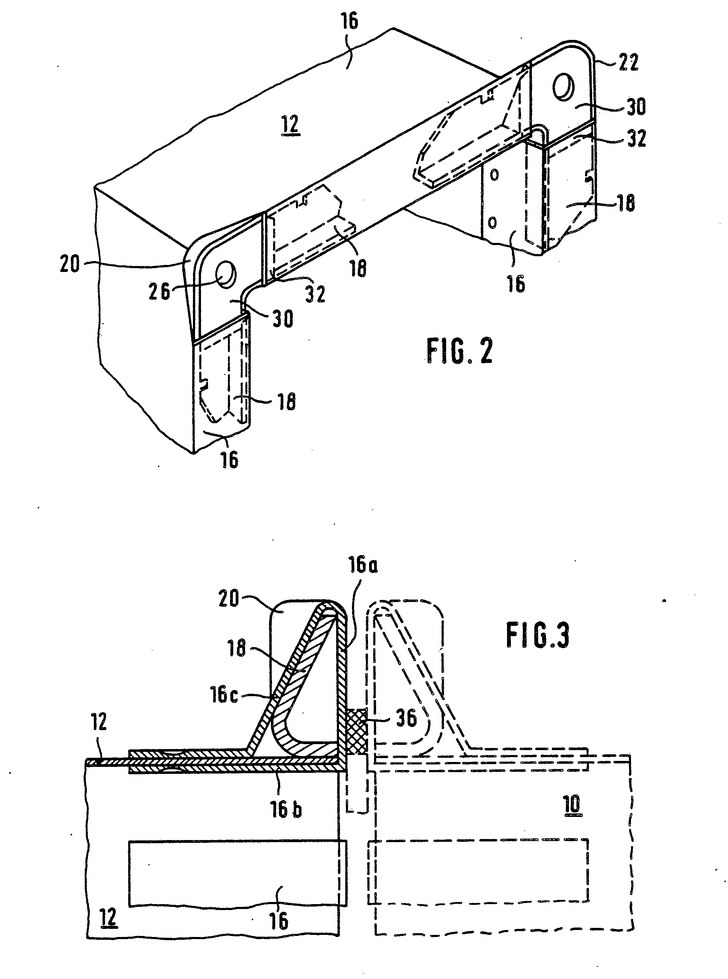

Auf die Stoßkanten der Kanalabschnitte 10 und 12 ist jeweils ein Flansch aufgesteckt. Der Flansch besteht aus vier Profilschienen 16, deren Länge etwas geringer ist als die Seitenlänge des Querschnittes der Kanalabschnitte 10 und 12. Die Profilschienen 16 weisen, wie Fig. 3 am deutlichsten zeigt, ein Hohlprofil in Form eines rechtwinkligen Dreieckes auf, dessen längere Kathete 16a in der Ebene der Stoßfuge der Stoßverbindung und deren kürzere Kathete 16b in der Ebene der Seitenwand des Kanalabschnittes liegt. Die Kathete 16b und die Hypotenuse 16c des Hohlprofiles sind in Kanalrichtung verlängert und schließen einen in Längsrichtung der Profilschiene verlaufenden offenen Spalt ein, in welchen die Seitenwand des Kanalabschnittes einschiebbar ist, wie Fig. 3 zeigt.

Die über Eck der Kanalabschnitte benachbarten Profilschienen 16 sind mittels Eckwinkelstücken miteinander verbunden. Die Eckwinkelstücke weisen zwei rechtwinklig zueinander verlaufende Schenkel 18 auf, die in das Hohlprofil der jeweiligen Profilschienen 16 eingesetzt werden. Die Schenkel 18 weisen ein Winkelprofil auf, wie ebenfalls in Fig. 3 am deutlichsten zu sehen ist. Das Winkelprofil der Schenkel 18 liegt an den Seiten 16b bzw. 16c der Profilschienen 16 von innen an. Der Scheitel des Winkelprofiles der Schenkel 18 ist abgerundet, wie Fig. 3 zeigt, so daß beim Aufstecken des Flansches auf den Kanalabschnitt 10 bzw. 12 die Wand des Kanalabschnittes zwangsläufig zwischen den Schenkel 18 des Eckwinkelstückes und die Seite 16b der Profilschiene 16 geführt wird. Ein unvollständiges Eindringen der Seitenwand des Kanalabschnittes in die Profilschiene 16 und eine Verformung der Schenkel 18 der Eckwinkelstücke ist auf diese Weise ausgeschlossen.

In dem nicht in die Profilschienen 16 hineinragenden Scheitelbereich 20 sind die Eckwinkelstücke in Kanalrichtung ausgewölbt, wie am deutlichsten die Schnittdarstellung der Fig. 5 zeigt. Die äußere Kante 22 und die innere Kante 24 erstrecken sich auf die Stoßfugenebene zu.

In dem Scheitelbereich 20 der Eckwinkelstücke ist jeweils ein Loch 26 vorgesehen. In die Löcher 26 werden Schrauben 28 zum Verschrauben der Stoßverbindung eingesetzt, wie die Fig. 1 und 5 zeigen.

In die Wölbung des Scheitelbereiches 20 der Eckwinkelstücke ist eine Beilage 30 aus Kunststoff eingesetzt. Diese Beilage 30 füllt die Wölbung des Scheitelbereichs 20 bis zum Ansatz der Schenkel 18 vollständig aus. Am Ansatz der Schenkel 18 weist die Beilage 30 jeweils eine Abschrägung 32 auf, mit welcher sie in die Profilschienen 16 eingreift. Die Beilagen 30 weisen mit den Löchern 26 fluchtende Durchgangsbohrungen auf.

Der aus den Profilschienen 16 und den Eckwinkelstücken vollständig zusammengesetzte Flansch wird auf den Kanalabschnitt 10 bzw.

12 aufgesetzt und an den Stellen 34 durch Punktschweißen befestigt.

Bei der Montage der Stoßverbindung wird zwischen die aneinander stoßenden Flansche ein Dichtungsstreifen 36 eingesetzt. Der Dichtungsstreifen 36 liegt an den einander zugewandten Flächen 16a der Profilschienen 16 an und wird im Bereich der Eckwinkelstücke durch die Beilagen 30 gestützt. Die vier jeweils an den Ecken des Flansches angeordneten Schrauben 28 erzeugen den erforderlichen Preßdruck für den Dichtungsstreifen 36. Da die Beilage 30 mit den Kanten 22 und 24 der Eckwinkelstücke bündig abschließt, ist ihre zur Stoßfugenebene parallele Fläche in Kanalrichtung gegen die Flächen 16a der Profilschienen zurückgesetzt. Zwischen den äußeren Kanten 22 und eberso zwischen den Beilagen 30 der einander gegenüberliegenden Eckwinkelstücke bleibt somit ein Luftspalt, wie Fig. 5 zeigt, in welchem sich nur der Dichtungsstreifen 36 befindet. Die in Kanalrichtung wirkende Zugkraft der Schrauben 28 wird daher nicht durch die Eckwinkelstücke oder die Beilagen 30 abgestützt, sondern vollständig auf die Profilschienen 16 übertragen.

Wie in Fig. 5 zur Verdeutlichung etwas übertrieben dargestellt ist, ist die äußere Kante 22 der Eckwinkelstücke im Scheitelbereich etwas kürzer als die innere Kante 24 und die Fläche der Beilage 30 nicht parallel zur Stoßfugenebene, sondern nach außen etwas von der Stoßfugenebene weg geneigt. Dadurch ergibt sich, wie Fig. 5 zeigt, an der äußeren Kante 22 ein etwas größerer Spaltabstand zwischen den beiden einander gegenüber angeordneten Eckwinkelstücken. Dadurch kann mittels einer stärkeren Zugkraft der Schrauben 28 eine elastische Vorspannung der Eckwinkelstücke erzielt werden, die elastische Federungen der Eckwinkelstücke und der Profilschienen 16 aufnimmt. Außerdem ist sichergestellt, daß auf den Dichtungsstreifen 36 die erforderliche Pressung selbst dann ausgeübt wird, wenn die inneren Kanten 24 der Eckwinkelstücke sich beim Anziehen der Schrauben 28 berühren.

Wie in Fig. 4 gezeigt ist, bleibt zwischen den Profilschienen 16 und den Ecken der Kanalabschnitte 10 bzw. 12 ein ausreichender Abstand, um den Falz 14 der Kanalabschnitte aufzunehmen. Ein Ausklinken der Profilschienen für die Aufnahme des Falzes 14 ist daher nicht notwendig.

## Patentansprüche

1. Stoßverbindung für Kanalabschnitte (10, 12) aus Blech, insbesondere Kanalabschnitte für Lüftungsanlagen mit mit den Enden der Kanalabschnitte (10, 12) verbundenen Flanschen aus ein dreieckiges Hohlprofil aufweisenden Profilschienen (16), deren eine Profilseite (16a) parallel zu der Stoßfugenebene ist, in welcher die aufeinanderfolgenden Kanalabschnitte (10, 12) aneinanderstoßen, und deren Länge der jeweiligen Seitenlänge des mehreckigen Querschnitts der Kanalabschnitte (10, 12) entspricht, und aus Eckwinkelstücken mit einem Scheitelbereich (20) und in das Hohlprofil zweier benachbarter Profilschienen (16) einsteckbaren Schenkeln (18), wobei die ein Winkelprofil aufweisenden Schenkel (18) an den nicht zur Stoßfugenebene parallelen Seiten (16b, 16c) des Hohlprofils der Profilschienen (16) anliegen und wobei der in den Flanscheckbereichen außerhalb der Profilschienen (16) liegende Scheitelbereich (20) ein Loch (26) für eine Schraube zur Verbindung der Flansche aufweist, dadurch gekennzeichnet, daß der Scheitelbereich (20) der Eckwinkelstücke ein aus der Stoßfugenebene ausgewölbtes, in einem bezüglich der Kanalabschnitte (10, 12) axialen Schnitt U-förmiges Profil aufweist, dessen äußere Kante (22) einen etwas größeren Abstand von der Stoßfugenebene aufweist als dessen innere Kante (24).

2. Stoßverbindung nach Anspruch 1, dadurch gekennzeichnet, daß der das Loch (26) aufweisende Grund des U-Profils des Scheitelbereichs (20) in der gleichen Ebene liegt, wie die Scheitellinien des Winkelprofils der Schenkel (18).

3. Stoßverbindung nach Anspruch 1 oder 2, dadurch gekennzeichnet, daß in das ausgewölbte U-Profil des Scheitelbereiches (20) eine Beilage (30) eingesetzt ist, die dieses U-Profil bis an dessen der Stoßfugenebene zugewandte Kanten (22, 24) ausfüllt.

4. Stoßverbindung nach Anspruch 3, dadurch gekennzeichnet, daß die Beilage (30) aus Kunststoff besteht.

5. Stoßverbindung nach Anspruch 1, dadurch gekennzeichnet, daß der Scheitel des Winkelprofils der Schenkel (18) der Eckwinkelstücke abgerundet ist.

## Claims

1. Butt joint for channel sections (10, 12) made of sheet metal, especially channel sections for ventilation systems, with flanges connected to the ends of the channel sections (10, 12) and consisting of profile rails (16) which have a triangular hollow profile and one profile side (16a) of which is parallel to the butt-joint plane in which the succeeding channel sections (10, 12) butt against one another and the length of which corresponds to the particular side length of the polygonal cross-section of the channel sections (10, 12), and of corner angle pieces with a vertex region (20) and with legs (18) which can be inserted into the hollow profile of two adjacent provile rails (16), the legs (18) which have an angular profile resting against the sides (16b, 16c), not parallel to the butt-joint plane, of the hollow profile of the profile rails (16), and the vertex region (20) located in the flange corner regions outside the profile rails (16) having a hole (26) for a screw to connect the flanges, characterised in that the vertex region (20) of the corner angle pieces has a profile which is curved outwards from the butt-joint plane and is U-shaped in an axial section relative to the channel sections (10, 12) and the outer edge (22) of which is at a somewhat greater distance from the butt-joint plane than its inner edge (24).

2. Butt joint according to Claim 1, characterised in that the bottom, having the hole (26), of the U-shaped profile of the vertex region (20) lies in the same plane as the vertex lines of the angular profile of the legs (18).

3. Butt joint according to Claim 1 or 2, characterised in that there is inserted into the outwardly curved U-shaped profile of the vertex region (20) a shim (30) which fills this U-shaped profile up to its edges (22, 24) facing the butt-joint plane.

4. Butt joint according to Claim 3, characterised in that the shim (30) consists of plastic.

5. Butt joint according to Claim 1, characterised in that the vertex of the angular profile of the legs (18) of the corner angle pieces is rounded.

**Revendications**

1. Jonction bout-à-bout pour des tronçons de canalisations (10, 12) en tôle, notamment des tronçons de canalisations pour des installations de ventilation avec des brides reliées aux extrémités des tronçons de canalisations (10, 12) et constituées d'une part, de profilés (16) comportant une section triangulaire et dont un côté (16a) est parallèle au plan de jonction bout-à-bout selon lequel les tronçons seccessifs de canalisation (10, 12) se réunissent, et dont les longueurs correspondent aux longueurs des côtés respectifs de la section polygonale des tronçons de canalisations (10, 12), et d'autre part, de pièces de coin en équerre avec une zone de sommet (20) et deux branches (18) susceptibles d'être introduites dans la section creuse de deux profilés (16) voisins, ces branches (18) comportant un profil angulaire s'appliquant sur les côtés (16b, 16c), non parallèles au plan de jonction bout-à-bout, des profilés (16) tandis que la zone de sommet (20) se situant dans les zones de coin des brides en dehors des profilés (16) comporte un trou (26) pour une vis destinée à relier ces brides, jonction bout à bout caractérisée en ce que la zone de sommet (20) des pièces de coin en équerre comporte un profil cintré à partir du plan de jonction bout-à-bout et, présentant en coupe axiale par rapport aux tronçons de canalisation (10, 12) un profil en U, le bord externe (22) de ce profil étant à une distance un peu plus grande du plan de jonction bout-à-bout que son bord interne (24).

2. Jonction bout-à-bout selon la revendication 1, caractérisée en ce que le fond, comportant le trou (26) du profil en U de la zone de sommet (20) se situe dans le même plan que les lignes de sommets des profils angulaires des branches (18).

3. Jonction bout-à-bout selon la revendication 1 ou 2, caractérisée en ce qu'une cale (30) est insérée dans le profil cintré en U de la zone de sommet (20), cette cale remplissant ce profil en U jusqu'aux bords (22, 24) de ce profil tournés vers le plan de jonction bout-à-bout.

4. Jonction bout-à-bout selon la revendication 3, caractérisée en ce que la cale (30) est en matière plastique.

5. Jonction bout-à-bout selon la revendication 1, caractérisée en ce que le sommet du profil angulaire des branches (18) des pièces de coin en équerre est arrondi.

FIG.1

FIG. 2

FIG.3

**16**

**26**

**22**

**30**

**32**

**24**

**14**

**12**

**12**

**16**

**FIG. 4**

**20**

**24**

**30**

**22**

**30**

**20**

**28**

**FIG.5**